# EUROPÄISCHE PATENTSCHRIFT

(11) **EP 3 620 842 B1**
(45) Veröffentlichungstag und Bekanntmachung des Hinweises auf die Patenterteilung: **23.02.2022**
(21) Anmeldenummer: 19190870.6
(22) Anmeldetag: 08.08.2019
(51) Int. Cl.: G02B 27/01, G02B 27/62

(54) **KONZEPT ZUM EINSTELLEN EINES HEAD-UP-DISPLAYS IN EINEM KRAFTFAHRZEUG**
CONCEPT FOR ADJUSTING A HEAD-UP DISPLAY IN A MOTOR VEHICLE
CONCEPT DE RÉGLAGE D'UN AFFICHAGE TÊTE HAUTE DANS UN VÉHICULE AUTOMOBILE

(30) Priorität: 06.09.2018 DE 102018215185
(43) Veröffentlichungstag der Anmeldung: 11.03.2020
(73) Patentinhaber: Volkswagen AG, 38440 Wolfsburg (DE)
(72) Erfinder: Wunderwald, Tim, 38448 Wolfsburg (DE)

(56) Entgegenhaltungen:
- EP-A1- 3 444 584
- DE-A1-102011 075 702
- DE-A1-102012 010 120
- DE-A1-102014 019 013
- DE-A1-102015 008 887
- DE-B3-102014 001 376
- DE-B4-102005 037 797
- US-A1- 2015 168 719

## Beschreibung

Die vorliegende Erfindung betrifft ein Verfahren, eine Vorrichtung und ein computerlesbares Speichermedium mit Instruktionen zum Einstellen eines Head-Up-Displays in einem Kraftfahrzeug. Die Erfindung betrifft weiterhin eine Einstellvorrichtung zur Verwendung in einem solchen Verfahren oder mit einer solchen Vorrichtung.

Die Fahrzeugnavigation wird in Zukunft vermehrt Darstellungen in einem Head-Up-Display (HUD) nutzen. Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen.

Mit der stetigen Weiterentwicklung von Virtual- und Augmented-Reality-Technologien und -Anwendungen finden diese auch Einzug in das Automobil, insbesondere für die Anzeigen von Head-Up-Displays. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet.

Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren. Augmented Reality bietet vielfältige Anwendungsmöglichkeiten zur Unterstützung des Fahrers durch kontaktanaloge Markierung von Fahrbahnen und Objekten, insbesondere für die Fahrzeugnavigation.

Damit die Funktionalität eines Head-Up-Displays, also das Darstellen von Fahrinformationen auf der Frontscheibe, vom Kunden als korrekt empfunden wird, erfordert der Verbau von Head-Up-Displays aufgrund der auftretenden Toleranzen eine Kalibrierung während der Fahrzeugproduktion. Die Toleranzen entstehen durch den Aufbau des Head-Up-Display-Moduls, d.h. des Projektors, der das darzustellende Bild über mehrere Umlenkspiegel auf die Frontscheibe projiziert, den Einbau des Moduls ins Cockpit sowie durch den Aufbau und den Einbau der Frontscheibe. Sofern Augmented-Reality-Darstellungen genutzt werden, sind die zulässigen Toleranzen noch enger. In diesem Fall ist neben der Kalibrierung, also dem softwareseitigen Ausgleichen der Toleranzen durch Offsets im zugehörigen Steuergerät, auch noch eine Justage der Einbaulage des Moduls relativ zur Frontscheibe erforderlich.

In diesem Zusammenhang beschreibt DE 10 2005 037 797 B4 ein System zur Kalibrierung einer Projektion eines Head-Up-Displays, das automatisierbar bei der Fertigung eines Transportmittels oder einer Nachrüstung verwendbar ist. Eine Projektionsvorrichtung erzeugt ein Kalibriermuster auf einer Projektionsfläche, das von einer Kameravorrichtung aufgenommen wird. Die Projektionsvorrichtung und die Kameravorrichtung werden von einer Steuereinheit angesteuert. Zusätzlich umfasst das System ein Mittel zur automatischen Kalibrierung der Projektion sowie ein von der Steuereinheit ansteuerbares Positioniermittel für die Kameravorrichtung. In Abhängigkeit von den von der Kameravorrichtung erfassten Signalen des Kalibriermusters steuert die Steuereinheit das Mittel zur automatischen Einstellung der Kalibrierung so an, dass eine vorbestimmte Zielfunktion, insbesondere die Verzerrungsfreiheit der Projektion erfüllt wird. Die Projektion kann auch auf ein Kalibriertarget erfolgen.

DE 10 2012 010 120 A1 beschreibt ein Verfahren zur Kalibrierung eines Head-Up-Displays in einem Kraftfahrzeug. Bei dem Verfahren wird eine Kamera in einer definierten Position in dem Fahrzeug positioniert. Das Head-Up-Display projiziert dann ein Testbild auf eine Windschutzscheibe des Fahrzeugs. Die Kamera ist so positioniert, dass von der Kamera wenigstens ein Kantenbereich einer Eyebox aufgenommen wird.

DE 10 2014 013 221 A1 beschreibt eine Vorrichtung zur Kalibrierung einer Bildanzeigeeinheit eines Fahrzeugs. Die Vorrichtung umfasst eine der Bildanzeigeeinheit zugehörige Projektionseinheit, die Bilder auf einen Projektionsschirm in ein Sichtfeld eines Fahrzeuginsassen und auf eine an einem Fahrzeugsitz angeordnete Kopfstütze projiziert. Mittels der Projektionseinheit wird ein Testmuster unmittelbar auf eine Oberfläche der Kopfstütze projiziert und von einer Erfassungseinheit erfasst. Für die Projektion des Testmusters kann die Projektionseinheit einen gesonderten Laser umfassen. Mittels einer Auswerteeinheit erfolgt ein Vergleich des erfassten Testmusters mit einem Sollmuster. Als Erfassungseinheit kann eine Innenraumkamera genutzt werden.

DE 10 2015 008 887 A1 beschreibt ein Verfahren zur Kalibrierung eines Head-Up-Displays in einem Fahrzeug, bei welchem ein von dem Head-Up-Display ausgegebenes virtuelles Bild mit einer möglichen Augenposition eines Fahrers abgeglichen wird. Im Rahmen eines Kalibriervorgangs wird eine mit einer Markierung versehene Messeinheit an einer möglichen Kopfposition des Fahrers positioniert und ein vor dem Fahrzeug befindliches Messtarget detektiert. Eine Bildaufnahmeeinrichtung zur Ermittlung der möglichen Augenposition des Fahrers nimmt gleichzeitig die Markierung der Messeinheit auf. Aus einem ermittelten Versatz der Messeinheit und der Bildaufnahmeeinrichtung wird eine elektronische Korrektur zur Kalibrierung des virtuellen Bildes des Head-Up-Displays bestimmt.

Die Kalibrierung erfolgt aktuell in der Regel auf einem Prüfstand für Fahrerassistenzsysteme am Ende des Produktionsbandes. Auf dem Prüfstand wird, nachdem das Fahrzeug im Prüfstand ausgerichtet wurde, eine Kamera mittels eines mechanisch verfahrbaren Teleskop-Arms auf die wahrscheinlichste Augenposition des Fahrers gebracht, d.h. die Mitte der sogenannten Eyebox. Diese Position wird anhand eines simulierten idealen Fahrzeugs vorgegeben. Etwaige Abweichungen des realen Fahrzeugs bezüglich der Position im Prüfstand und im Raum werden durch Lasersensoren mittels einer Erfassung der Radhauskanten ermittelt und bei der Positionierung der Kamera berücksichtigt. Im Anschluss werden verschiedene Testbilder angezeigt, anhand derer zum einen die Lage des dargestellten Bildes als auch die Verzerrung und Bildfehler der Darstellung ermittelt werden. Diese Informationen werden dann in das entsprechende Steuergerät geschrieben, welches diese Abweichungen daraufhin bei der Darstellung der Fahrinformationen berücksichtigt.

Allerdings sind die Schwankungen beim Aufbau der Radhauskanten groß, sodass bei der Positionierung schon Fehler entstehen können. Gleichzeitig sind diese Punkte die einzigen von außen messbaren Konturen, die durch Laser erfasst und mit der Simulation verglichen werden können.

Um die Toleranzen bei der Positionierung der Kamera zu umgehen, kann die Justage und Kalibrierung bereits in der Montagelinie erfolgen. Hierbei wird ein Teleskop-Arm mit einer Kamera mithilfe eines Manipulators ins Fahrzeug eingebracht. Dieser Manipulator kann sich bei noch nicht eingebauten Sitzen auf Löchern eines Referenzpunktsystems im Boden abstützen und dann die Kamera in der Mitte der Eyebox positionieren. Im Anschluss verfahren Schrauber automatisiert zu den Einstellschrauben des Moduls. Danach werden die dargestellten Testbilder mithilfe der Kamera ausgewertet und die Schrauber entsprechend angesteuert, um das Bild in eine optimale Lage zu bringen. Abschließend werden kleine Verzerrungen im Bild über eine Kalibrierung ausgeglichen.

Allerdings ist auch dieser Prozess nicht produktionssicher, da die Schwingungen in der Montagelinie zu Fehlern bei der Bildaufnahme führen können. Dies kann wiederrum die Auswertung unmöglich machen.

Ferner gibt es bei beiden Lösungen keine ausreichende Kundendienstlösung. Aktuell wird mit Hilfe einer Sonnenblende mit Schlitz das Bild von einem Kundendienstmitarbeiter in eine plausible Position gebracht. Bildfehler oder Verzerrungen werden hierbei nicht betrachtet. Auch die hohen Anforderungen an die Genauigkeit für Augmented-Reality-Darstellungen können durch diese Methode nur schwer eingehalten werden.

Es ist eine Aufgabe der Erfindung, ein verbessertes Konzept zum Einstellen eines Head-Up-Displays in einem Kraftfahrzeug bereitzustellen.

Diese Aufgabe wird durch ein Verfahren mit den Merkmalen des Anspruchs 1, durch ein computerlesbares Speichermedium mit Instruktionen gemäß Anspruch 6 und durch eine Einstellvorrichtung mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zum Einstellen eines Head-Up-Displays in einem Kraftfahrzeug die Schritte:
- Einbringen einer Einstellvorrichtung in eine definierte Position im Kraftfahrzeug, wobei die Einstellvorrichtung zumindest eine Kamera und eine Projektionseinheit aufweist;
- Projizieren eines Ausrichtungsmusters mit der Projektionseinheit auf eine außerhalb des Kraftfahrzeugs positionierte Kalibriertafel;
- Erfassen der Kalibriertafel und des Ausrichtungsmusters mit einer im Kraftfahrzeug verbauten kalibrierten Kamera;
- Bestimmen einer Abweichung der Einstellvorrichtung von der definierten Position im Kraftfahrzeug auf Basis der Bilddaten der kalibrierten Kamera;
- Erfassen zumindest eines durch das Head-Up-Display dargestellten Testbildes mit der Kamera der Einstellvorrichtung; und
- Ermitteln von Einstellinformationen für das Head-Up-Display auf Basis des zumindest einen erfassten Testbildes unter Berücksichtigung der auf Basis der Bilddaten der kalibrierten Kamera bestimmten Abweichung.

Gemäß einem weiteren Aspekt der Erfindung enthält ein computerlesbares Speichermedium Instruktionen, die bei Ausführung durch einen Computer den Computer zur Ausführung der folgenden Schritte zum Einstellen eines Head-Up-Displays in einem Kraftfahrzeug veranlassen:
- Einbringen einer Einstellvorrichtung in eine definierte Position im Kraftfahrzeug, wobei die Einstellvorrichtung zumindest eine Kamera und eine Projektionseinheit aufweist;
- Projizieren eines Ausrichtungsmusters mit der Projektionseinheit auf eine außerhalb des Kraftfahrzeugs positionierte Kalibriertafel;
- Erfassen der Kalibriertafel und des Ausrichtungsmusters mit einer im Kraftfahrzeug verbauten kalibrierten Kamera;
- Bestimmen einer Abweichung der Einstellvorrichtung von der definierten Position im Kraftfahrzeug auf Basis der Bilddaten der kalibrierten Kamera;
- Erfassen zumindest eines durch das Head-Up-Display dargestellten Testbildes mit der Kamera der Einstellvorrichtung; und
- Ermitteln von Einstellinformationen für das Head-Up-Display auf Basis des zumindest einen erfassten Testbildes unter Berücksichtigung der auf Basis der Bilddaten der kalibrierten Kamera bestimmten Abweichung.

Der Begriff Computer ist dabei breit zu verstehen. Insbesondere umfasst er auch Workstations, Steuergeräte und andere prozessorbasierte Datenverarbeitungsvorrichtungen.

Gemäß einem weiteren Aspekt der Erfindung weist eine Einstellvorrichtung zur Verwendung in einem erfindungsgemäßen Verfahren oder mit einer erfindungsgemäßen Vorrichtung auf:
- eine Projektionseinheit zum Projizieren eines Ausrichtungsmusters auf eine außerhalb des Kraftfahrzeugs positionierte Kalibriertafel;
- eine Kamera zum Erfassen zumindest eines durch das Head-Up-Display dargestellten Testbildes; und
- eine Halterung zum Befestigen der Einstellvorrichtung in einer definierten Position im Kraftfahrzeug.

Die erfindungsgemäße Lösung basiert auf der Idee, die Ausrichtung der Kamera, die die Testbilder aufnimmt, auf Basis einer im Fahrzeug verbauten Multifunktionskamera umzusetzen. In Fahrzeugen mit Head-Up-Display ist eine Multifunktionskamera verbaut.

Diese erfasst wichtige Fahrinformationen, wie z.B. Verkehrsschilder oder Fahrbahnmarkierungen, und gibt diese an das Head-Up-Display zur Darstellung auf der

Scheibe weiter. Für die Kalibrierung der Multifunktionskamera wird aktuell eine Kalibriertafel verwendet, auf der ein Muster abgebildet ist. Beispielsweise hat die Kalibriertafel eine Größe von 1500mmx2000mm und befindet sich in einer Entfernung von 1m vor dem Fahrzeug. Die Multifunktionskamera nimmt das Muster auf und kalibriert sich auf Basis des aufgenommenen Musters. Die Kalibriertafel ist in der Regel auch bei der Kalibrierung des Head-Up-Displays in der Kalibrierposition, d.h. bis fast auf den Boden heruntergefahren, damit die Bremslichter der vorherigen Fahrzeuge die Bildaufnahme der Testbilder nicht behindern.

Die Einstellvorrichtung besteht nun aus der Kamera zur Aufnahme der Testbilder, einer Projektionseinheit, die fest relativ zur Kamera angeordnet ist, und einer Halterung, an der die Kamera und die Projektionseinheit angebracht sind. Der Ablauf der Justage bzw. Kalibrierung erfolgt in mehreren Schritten. Zunächst wird die Halterung in das Fahrzeug eingebracht und fixiert. Die Position der Kamera stimmt nun bereits annähernd, da die Halterung vorzugsweise so konstruiert ist, dass die Kamera in der Nähe der Mitte der Eyebox positioniert ist. Nun wird die Projektionseinheit aktiviert und projiziert ein Ausrichtungsmuster auf die Kalibriertafel. Dieses Ausrichtungsmuster wird von der Multifunktionskamera erfasst. Die Abweichungen zur Ideallage des Ausrichtungsmusters werden an die Kamera der Einstellvorrichtung übertragen bzw. bei der späteren Auswertung der Testbilder berücksichtigt. Die Ideallage wird hierbei beispielsweise im Rahmen der Entwicklung bei dem simulierten Fahrzeug ermittelt und in der Multifunktionskamera hinterlegt. Da die Multifunktionskamera zuvor bereits kalibriert wurde, kann sie die Abweichungen des Ausrichtungsmusters von der Ideallage bestimmen.

Wurde durch die Kalibrierung der Multifunktionskamera beispielsweise eine Verbautoleranz der Multifunktionskamera von 1° Gierwinkel (links-rechts) ermittelt und misst die Multifunktionskamera das Ausrichtungsmuster nun 2° gierend neben der Ideallage, so überträgt sie unter Berücksichtigung der Kalibrierergebnisse nun eine Abweichung von 1° Gierwinkel an die Kamera der Einstellvorrichtung.

Anhand der durch die Multifunktionskamera gemessenen Abweichungen liegt der Kamera der Einstellvorrichtung somit die Information vor, wie sie relativ zur Ideallage positioniert ist.

Dies kann nun bei der Bildaufnahme der Testbilder bzw. dem Ermitteln der Einstellinformationen für das Head-Up-Display berücksichtigt werden.

Die beschriebene Lösung hat eine Reihe von Vorteilen. Aufgrund der inhärenten Wiederholgenauigkeit ist sie prozesssicher. Zudem reduziert sie die benötigte Fertigungszeit, da die Positionierung der Kamera bzw. der Kalibiervorrichtung schneller abgeschlossen werden kann. Des Weiteren sind die Kosten niedriger als bei Lösungen, die auf einem mechanisch verfahrbaren Teleskop-Arm beruhen. Gleichzeitig werden hohe Genauigkeiten erreicht. Die beschriebene Lösung ist zudem einheitlich sowohl in der Produktion als auch beim Kundendienst nutzbar.

Gemäß einem Aspekt der Erfindung werden die Einstellinformationen für das Head-Up-Display an ein Steuergerät für das Head-Up-Display übermittelt. Alternativ wird das Head-Up-Display auf Basis der Einstellinformationen justiert. Anhand der Einstellinformationen können einerseits die ermittelten Abweichungen in das Steuergerät des Head-Up-Displays geschrieben werden, d.h. das Head-Up-Display wird kalibriert. Dies ist insbesondere bei lediglich kleinen Abweichungen sinnvoll, da auf eine zusätzliche Justage verzichtet werden kann. Alternativ kann die Position des Head-Up-Display-Moduls optimiert werden, d.h. es wird eine Justage durchgeführt. Dies ist insbesondere bei größeren Abweichungen sinnvoll, da so der vollständige Darstellungsbereich des Head-Up-Displays genutzt werden kann.

Gemäß einem Aspekt der Erfindung weist die Projektionseinheit einen Laser auf. Das Ausrichtungsmuster ist dabei vorzugsweise eine Linie. Die Verwendung eines Lasers hat den Vorteil, dass ein sehr genau definiertes Ausrichtungsmuster projiziert werden kann, insbesondere in Anbetracht des Abstandes zwischen der Projektionseinheit und der Kalibiertafel. Eine Linie stellt dabei ein besonders leicht zu erzeugendes Ausrichtungsmuster dar, das eine lediglich eindimensionale Ablenkung des generierten Laserstrahls benötigt.

Gemäß einem Aspekt der Erfindung wird die Einstellvorrichtung mittels einer Halterung an Lagern zumindest einer Sonnenblende des Kraftfahrzeugs befestigt, beispielsweise an den Mittellagern der Sonnenblenden. Dies hat den Vorteil, dass die Einstellvorrichtung einfach eingehakt und fixiert werden kann. Zudem befinden sich die Lager an einer definierten Position im Kraftfahrzeug, so dass eine sehr gut reproduzierbare Positionierung der Einstellvorrichtung gewährleistet ist.

Gemäß einem Aspekt der Erfindung ist die definierte Position im Kraftfahrzeug die Position einer Eyebox des Head-Up-Displays. Da die vom Head-Up-Display generierten Inhalte im Bereich der Eyebox sichtbar sein sollen ist es zweckmäßig, auch die Einstellvorrichtung bzw. die Kamera der Einstellvorrichtung in diesem Bereich zu positionieren.

Gemäß einem Aspekt der Erfindung weist die Einstellvorrichtung einen Manipulator zum Justieren des Head-Up-Displays auf, beispielsweise einen Schrauber. Dies hat den Vorteil, dass die Einstellvorrichtung nicht nur die Einstellinformationen für das Head-Up-Display bestimmt, sondern auf Basis der Einstellinformationen auch gleich eine Justage des Head-Up-Display-Moduls vornimmt. Zwar erhöht die Verwendung von automatisierten Manipulatoren das Gewicht der Einstellvorrichtung, was die Ergonomie des Arbeitsablaufs des Bedieners beeinflusst, dafür kann auf einen separaten Justageschritt, der eventuell einer weiteren Kontrolle bedarf, verzichtet werden.

Gemäß einem Aspekt der Erfindung weist die Einstellvorrichtung zwei Kameras für Kraftfahrzeuge mit Linkslenkung und Kraftfahrzeuge mit Rechtslenkung auf. Neben einer Ausführungsform, bei der die Einstellvorrichtung entweder für Linkslenker oder Rechtslenker ausgelegt ist, kann die Einstellvorrichtung zwei Kameras und gegebenenfalls zwei Projektionseinheiten für Links- und Rechtslenker aufweisen. Auf diese Weise kann die Einstellvorrichtung für beide Arten von Fahrzeugen genutzt werden, so dass nicht unterschiedliche Einstellvorrichtungen bereitgehalten werden müssen.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Einstellen eines Head-Up-Displays in einem Kraftfahrzeug;
- Fig. 2: zeigt eine erste Ausführungsform einer Vorrichtung zum Einstellen eines HeadUp-Displays in einem Kraftfahrzeug;
- Fig. 3: zeigt eine zweite Ausführungsform einer Vorrichtung zum Einstellen eines HeadUp-Displays in einem Kraftfahrzeug;
- Fig. 4: zeigt schematisch einen allgemeinen Aufbau einer Head-Up-Display-Vorrichtung für ein Kraftfahrzeug;
- Fig. 5: stellt schematisch ein Kraftfahrzeug mit einer Head-Up-Display-Vorrichtung dar;
- Fig. 6: zeigt schematisch eine Einstellvorrichtung; und
- Fig. 7: zeigt schematisch die Verwendung der Einstellvorrichtung aus Fig. 6 zum Einstellen eines Head-Up-Displays in einem Kraftfahrzeug.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

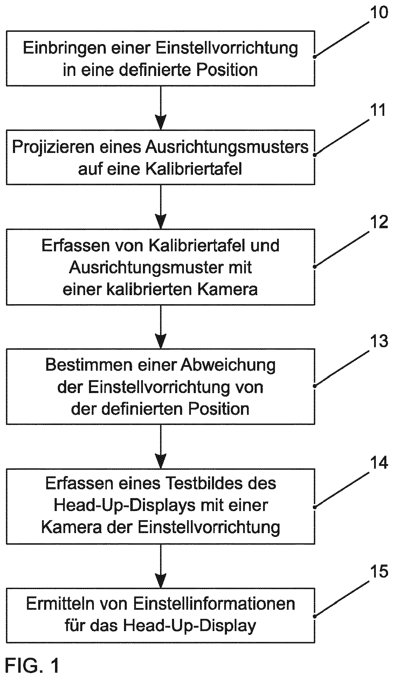

Fig. 1 zeigt schematisch ein Verfahren zum Einstellen eines Head-Up-Displays in einem Kraftfahrzeug. In einem ersten Schritt 10 wird eine Einstellvorrichtung in eine definierte Position im Kraftfahrzeug eingebracht, vorzugsweise in die Position einer Eyebox des Head-Up-Displays. Die Einstellvorrichtung kann beispielsweise mittels einer Halterung an Lagern zumindest einer Sonnenblende des Kraftfahrzeugs befestigt werden. Die Einstellvorrichtung weist zumindest eine Kamera und eine Projektionseinheit auf. Anschließend wird mit der Projektionseinheit ein Ausrichtungsmuster auf eine außerhalb des Kraftfahrzeugs positionierte Kalibriertafel projiziert 11. Die Projektionseinheit kann z.B. einen Laser aufweisen. Das Ausrichtungsmuster kann in diesem Fall eine Linie sein. Mit einer im Kraftfahrzeug verbauten kalibrierten Kamera werden die Kalibriertafel und das Ausrichtungsmuster erfasst 12. Auf Basis der Bilddaten der kalibrierten Kamera wird dann eine Abweichung der Einstellvorrichtung von der definierten Position im Kraftfahrzeug bestimmt 13. Daraufhin wird zumindest ein durch das Head-Up-Display dargestelltes Testbild mit der Kamera der Einstellvorrichtung erfasst 14. Auf Basis des zumindest einen erfassten Testbildes werden schließlich Einstellinformationen für das Head-Up-Display ermittelt 15.

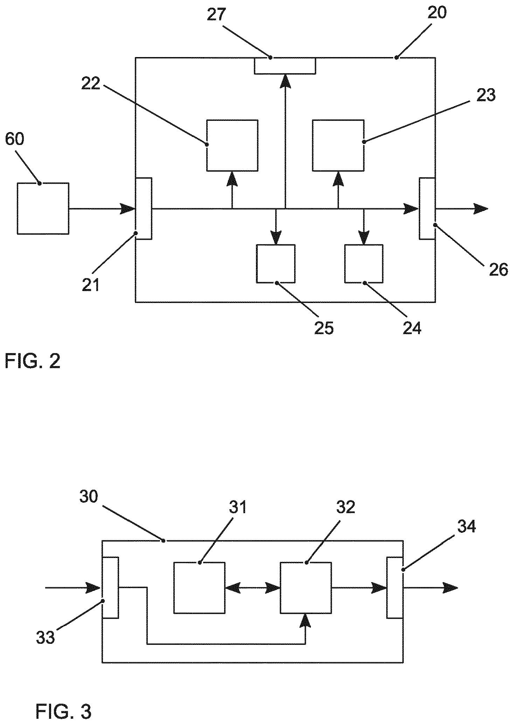

Fig. 2 zeigt eine vereinfachte schematische Darstellung einer ersten Ausführungsform einer Vorrichtung 20 zum Einstellen eines Head-Up-Displays in einem Kraftfahrzeug. Die Vorrichtung 20 hat einen Eingang 21, über den beispielsweise Daten einer Einstellvorrichtung 60, die zumindest eine Kamera und eine Projektionseinheit aufweist, empfangen werden können. Eine Steuerungseinheit 22 sorgt dafür, dass die Einstellvorrichtung 60 in eine definierte Position im Kraftfahrzeug eingebracht wird, vorzugsweise in die Position einer Eyebox des Head-Up-Displays. Die Einstellvorrichtung kann beispielsweise mittels einer Halterung an Lagern zumindest einer Sonnenblende des Kraftfahrzeugs befestigt werden. Die Steuerungseinheit 22 steuert zudem das Projizieren eines Ausrichtungsmusters mit der Projektionseinheit auf eine außerhalb des Kraftfahrzeugs positionierte Kalibriertafel. Die Projektionseinheit kann z.B. einen Laser aufweisen. Das Ausrichtungsmuster kann in diesem Fall eine Linie sein. Eine Recheneinheit 23 erfasst die Kalibriertafel und das Ausrichtungsmuster mit einer im Kraftfahrzeug verbauten kalibrierten Kamera. Zudem bestimmt die Recheneinheit 23 eine Abweichung der Einstellvorrichtung von der definierten Position im Kraftfahrzeug auf Basis der Bilddaten der kalibrierten Kamera. Ebenso erfasst die Recheneinheit 23 zumindest ein durch das Head-Up-Display dargestellte Testbild mit der Kamera der Einstellvorrichtung 60 und ermittelt Einstellinformationen für das Head-Up-Display auf Basis des zumindest einen erfassten Testbildes. Natürlich können für die verschiedenen Funktionen der Recheneinheit 23 auch getrennte Einheiten vorgesehen sein. Über einen Ausgang 26 der Vorrichtung 20 werden die Einstellinformationen an ein Steuergerät für das Head-Up-Display ausgegeben oder für eine Justage des Head-Up-Displays bereitgestellt.

Die Steuerungseinheit 22 und die Recheneinheit 23 können von einer Kontrolleinheit 24 gesteuert werden. Über eine Benutzerschnittstelle 27 können gegebenenfalls Einstellungen der Steuerungseinheit 22, der Recheneinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Steuerungseinheit 22, die Recheneinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso in der Einstellvorrichtung 60 integriert sein.

Fig. 3 zeigt eine vereinfachte schematische Darstellung einer zweiten Ausführungsform einer Vorrichtung 30 zum Einstellen eines Head-Up-Displays in einem Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Daten einer Einstellvorrichtung. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

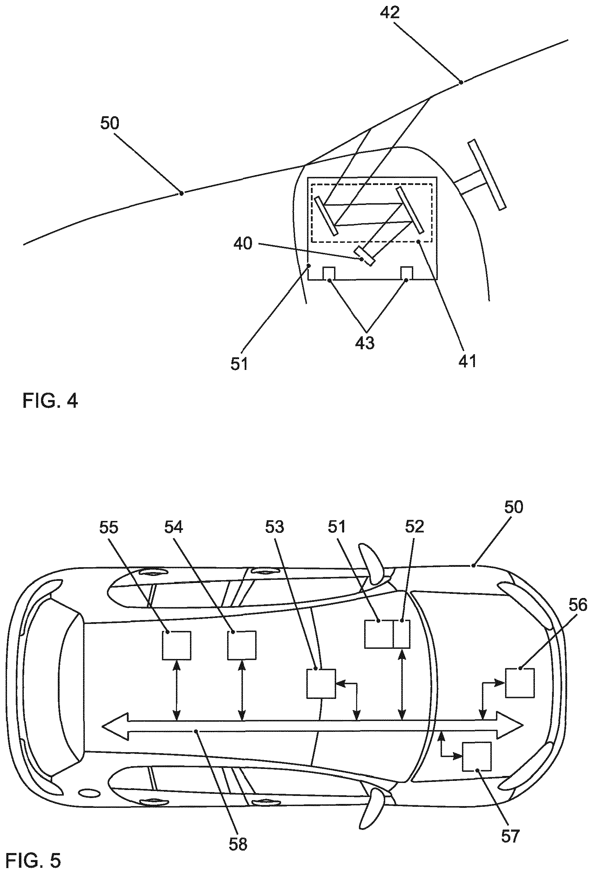

Fig. 4 zeigt schematisch ein Head-Up-Display 51 für ein Kraftfahrzeug 50. Mit Hilfe des Head-Up-Displays 51 können Inhalte auf einer Projektionsfläche 42 des Kraftfahrzeugs 50 angezeigt werden, beispielsweise auf der Frontscheibe. Die dargestellten Inhalte werden durch eine bildgebende Einheit 40 erzeugt und mit Hilfe eines optischen Moduls 41 auf die Projektionsfläche 42 projiziert. Typischerweise erfolgt die Projektion dabei in einen Bereich der Frontscheibe oberhalb des Lenkrades. Die bildgebende Einheit 40 kann beispielsweise ein LCD-TFT-Display sein. Das Head-Up-Display 51 ist in der Regel in einem Armaturenbrett des Kraftfahrzeugs 50 verbaut. Mittels Einstellelementen 43 kann die Position des Head-Up-Displays 51 justiert werden.

Fig. 5 stellt schematisch ein Kraftfahrzeug 50 mit einem Head-Up-Display 51 dar. Das Head-Up-Display 51 wird von einem zugehörigen Steuergerät 52 gesteuert. Weitere Komponenten des Kraftfahrzeugs 50 sind eine Kamera 53 für die Umfeldüberwachung, ein Navigationssystem 54, eine Datenübertragungseinheit 55 sowie eine Reihe von Assistenzsystemen 56, von denen eines exemplarisch dargestellt ist. Mittels der Datenübertragungseinheit 55 kann eine Verbindung zu Dienstanbietern aufgebaut werden, beispielsweise zum Abrufen von Kartendaten. Zur Speicherung von Daten ist ein Speicher 57 vorhanden. Der Datenaustausch zwischen den verschiedenen Komponenten des Kraftfahrzeugs 50 erfolgt über ein Netzwerk 58.

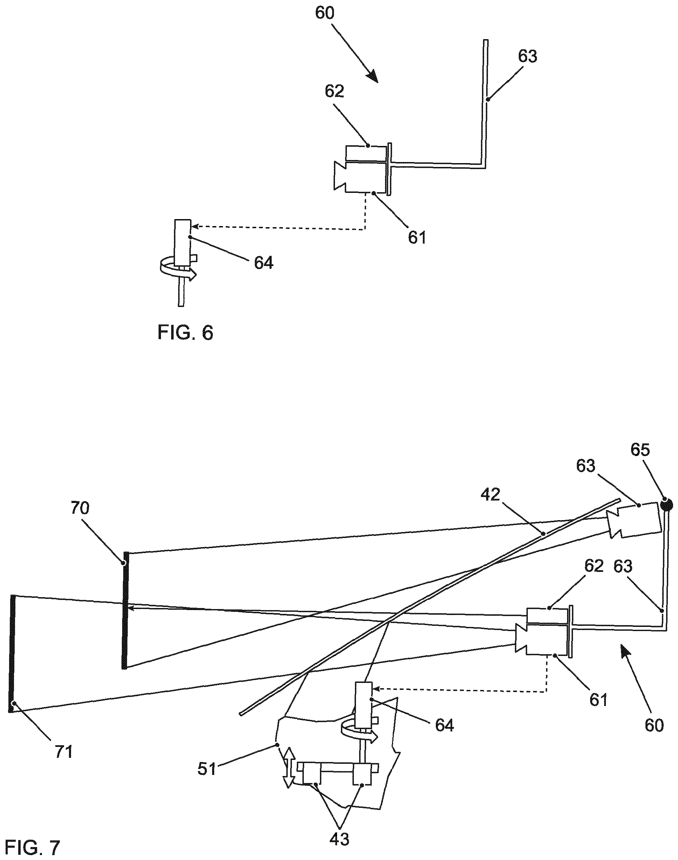

Fig. 6 zeigt schematisch eine Einstellvorrichtung 60 zur Verwendung in dem Verfahren aus Fig. 1 oder mit der Vorrichtung aus Fig. 2 oder Fig. 3. Die Einstellvorrichtung 60 hat eine Projektionseinheit 62 zum Projizieren eines Ausrichtungsmusters auf eine außerhalb eines Kraftfahrzeugs positionierte Kalibriertafel. Die Projektionseinheit 62 kann z.B. einen Laser aufweisen. Das Ausrichtungsmuster kann in diesem Fall eine Linie sein. Eine Kamera 61 dient zum Erfassen zumindest eines durch ein Head-Up-Display des Kraftfahrzeugs generierten Testbildes. Mit einer Halterung 63 kann die Einstellvorrichtung 60 in einer definierten Position im Kraftfahrzeug befestigt werden. Optional ist zumindest ein Manipulator 64 vorgesehen, beispielsweise ein Schrauber, mit dem das Head-Up-Display justiert werden kann. Dieser kann an der Einstellvorrichtung 60 befestigt sein oder auch lediglich von der Einstellvorrichtung 60 angesteuert werden. In einer Ausführungsform kann die Einstellvorrichtung 60 zwei Kameras 61 für Kraftfahrzeuge mit Linkslenkung und Kraftfahrzeuge mit Rechtslenkung aufweisen. In diesem Fall können auch zwei Projektionseinheiten 62 vorgesehen sein.

Fig. 7 zeigt schematisch die Verwendung der Einstellvorrichtung 60 aus Fig. 6 zum Einstellen eines Head-Up-Displays 51 in einem Kraftfahrzeug. Der Bediener, der das Fahrzeug auf den Prüfstand bewegt, positioniert die Einstellvorrichtung 60 an Lagern 65 der Sonnenblenden, z.B. an den Mittellagern. Im Anschluss startet er den Einstellvorgang. Dies kann sowohl auf der Anlage als auch durch ein Serienprüfsystem umgesetzt sein. Die Steuerung der Kameras 53, 61 und der Projektionseinheit 62 sowie die Anzeige der Testbilder erfolgt nun automatisiert über die Anlage bzw. das Serienprüfsystem.

Im Beispiel in Fig. 7 weist die Projektionseinheit 62 einen Laser auf. Die Kamera 61 der Einstellvorrichtung 60 und der Laser wurden im Vorfeld in einem Ausrichtungsprozess optimal zueinander ausgerichtet. Der Laser projiziert nun eine Linie auf eine Kalibriertafel 70, die sich vor dem Fahrzeug befindet. Eine zuvor kalibrierte Multifunktionskamera 53 des Fahrzeugs ermittelt die rotatorischen Abweichungen der projizierten Linie um alle Achsen zur Solllage bei ideal positionierter Halterung 63 der Einstellvorrichtung 60. Eine Verschiebung der Laserlinie entlang der Y-Achse (links-rechts) bedeutet dabei eine Verdrehung der Halterung 63 um die Vertikalachse (Z-Achse). Eine Verschiebung der Laserlinie entlang der Z-Achse (oben-unten) bedeutet eine Verdrehung der Halterung 63 um die Horizontalachse (Y-Achse). Eine Verdrehung der Laserlinie im oder gegen den Uhrzeigesinn bedeutet eine Verdrehung der Halterung 63 um die Fahrzeuglängsachse (X-Achse). Da der Laser und die Kalibrierungskamera 61 zueinander ausgerichtet sind, ist nun die Blickrichtung der Kalibrierungskamera 61 bekannt und die Kamera 61 ist für die Kalibrierung einsatzbereit. Die Kamera 61 ermittelt nun die Abweichung des vom Head-Up-Display 51 unter Verwendung der Projektionsfläche 42, d.h. der Windschutzscheibe, generierten virtuellen Bildes 71 von der Solllage bei ideal eingebautem Head-Up-Display-Modul unter Berücksichtigung der von der Multifunktionskamera 53 ermittelten Abweichungen. Die aus diesen Abweichungen bestimmten Einstellinformationen können nun in das Steuergerät des Head-Up-Displays 51 geschrieben und bei der Darstellung berücksichtigt werden. Alternativ können automatisiert Manipulatoren 64 angesteuert werden, die das Head-Up-Display-Modul mittels der Einstellelemente 43 in seiner Lage so verändern, dass das Bild auf eine Nulllage eingestellt wird. Als weitere Alternative können Anweisungen ausgegeben werden, um wie viele Umdrehungen und in welche Drehrichtung die Einstellelemente verstellt werden müssen, um das Bild auf die Nulllage einzustellen. Es erfolgt somit eine geführte Justage. Nach Beendigung des Einstellvorgangs entnimmt der Bediener vor dem Ausfahren aus dem Prüfstand die Einstellvorrichtung 60 aus dem Fahrzeug und bewegt im Anschluss das Fahrzeug aus dem Prüfstand.

Die oben beschriebene geführte Justage kann auch bei einer Einstellung des Head-Up-Displays 51 durch einen Kundendienst durchgeführt werden.

### Bezugszeichenliste

- 10: Einbringen einer Einstellvorrichtung in eine definierte Position
- 11: Projizieren eines Ausrichtungsmusters auf eine Kalibriertafel
- 12: Erfassen von Kalibriertafel und Ausrichtungsmuster mit einer kalibrierten Kamera
- 13: Bestimmen einer Abweichung der Einstellvorrichtung von der definierten Position
- 14: Erfassen eines Testbildes des Head-Up-Displays mit einer Kamera der Einstellvorrichtung
- 15: Ermitteln von Einstellinformationen für das Head-Up-Display
- 20: Vorrichtung
- 21: Eingang
- 22: Steuerungseinheit
- 23: Recheneinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Bildgebende Einheit
- 41: Optisches Modul
- 42: Projektionsfläche
- 43: Einstellelement
- 50: Kraftfahrzeug
- 51: Head-Up-Display
- 52: Steuergerät
- 53: Kamera
- 54: Navigationssystem
- 55: Datenübertragungseinheit
- 56: Assistenzsystem
- 57: Speicher
- 58: Netzwerk
- 60: Einstellvorrichtung
- 61: Kamera
- 62: Projektionseinheit
- 63: Halterung
- 64: Manipulator
- 65: Lager
- 70: Kalibriertafel
- 71: Virtuelles Bild

## Patentansprüche

1. Verfahren zum Einstellen eines Head-Up-Displays (51) in einem Kraftfahrzeug (50), mit den Schritten:
- Einbringen (10) einer Einstellvorrichtung (60) in eine definierte Position im Kraftfahrzeug (50), wobei die Einstellvorrichtung (60) zumindest eine Kamera (61) und eine Projektionseinheit (62) aufweist;
- Projizieren (11) eines Ausrichtungsmusters mit der Projektionseinheit (62) auf eine außerhalb des Kraftfahrzeugs (50) positionierte Kalibriertafel (70);
- Erfassen (12) der Kalibriertafel (70) und des Ausrichtungsmusters mit einer im Kraftfahrzeug (50) verbauten kalibrierten Kamera (53);
- Bestimmen (13) einer Abweichung der Einstellvorrichtung (60) von der definierten Position im Kraftfahrzeug (50) auf Basis der Bilddaten der kalibrierten Kamera (53);
- Erfassen (14) zumindest eines durch das Head-Up-Display (51) dargestellten Testbildes mit der Kamera (61) der Einstellvorrichtung (60); und
- Ermitteln (15) von Einstellinformationen für das Head-Up-Display (51) auf Basis des zumindest einen erfassten Testbildes unter Berücksichtigung der auf Basis der Bilddaten der kalibrierten Kamera (53) bestimmten Abweichung.

2. Verfahren gemäß Anspruch 1, wobei die Einstellinformationen für das Head-Up-Display (51) an ein Steuergerät (52) für das Head-Up-Display (51) übermittelt werden oder das Head-Up-Display (51) auf Basis der Einstellinformationen justiert wird.

3. Verfahren gemäß Anspruch 1 oder 2, wobei die Projektionseinheit (62) einen Laser aufweist und das Ausrichtungsmuster eine Linie ist.

4. Verfahren gemäß einem der vorherigen Ansprüche, wobei die Einstellvorrichtung (60) mittels einer Halterung (63) an Lagern (65) zumindest einer Sonnenblende des Kraftfahrzeugs (50) befestigt wird.

5. Verfahren gemäß einem der vorherigen Ansprüche, wobei die definierte Position im Kraftfahrzeug (50) die Position einer Eyebox des Head-Up-Displays (51) ist.

6. Computerlesbares Speichermedium mit Instruktionen, die bei Ausführung durch einen Computer den Computer zur Ausführung der Schritte eines Verfahrens gemäß einem der Ansprüche 1 bis 3 zum Einstellen eines Head-Up-Displays (51) in einem Kraftfahrzeug (50) veranlassen.

7. Einstellvorrichtung (60) zur Verwendung in einem Verfahren gemäß einem der Ansprüche 1 bis 5 zum Einstellen eines Head-Up-Displays (51) in einem Kraftfahrzeug (50), mit:
- einer Projektionseinheit (62) zum Projizieren (11) eines Ausrichtungsmusters auf eine außerhalb des Kraftfahrzeugs (50) positionierte Kalibriertafel (70);
- einer Kamera (61) zum Erfassen (14) zumindest eines durch das Head-Up-Display (51) dargestellten Testbildes; und
- einer Halterung (63) zum Befestigen der Einstellvorrichtung (60) in einer definierten Position im Kraftfahrzeug (50).

8. Einstellvorrichtung (60) gemäß Anspruch 7, wobei die Einstellvorrichtung (60) einen Manipulator (64) zum Justieren des Head-Up-Displays (51) aufweist.

9. Einstellvorrichtung (60) gemäß Anspruch 7 oder 8, wobei die Einstellvorrichtung (60) zwei Kameras (61) für Kraftfahrzeuge (50) mit Linkslenkung und Kraftfahrzeuge (50) mit Rechtslenkung aufweist.

## Claims

1. Method for setting a head-up display (51) in a motor vehicle (50), having the steps of:
- introducing (10) a setting device (60) into a defined position in the motor vehicle (50), wherein the setting device (60) has at least one camera (61) and one projection unit (62);
- projecting (11) an alignment pattern using the projection unit (62) onto a calibration target (70) positioned outside the motor vehicle (50);
- acquiring (12) the calibration target (70) and the alignment pattern using a calibrated camera (53) installed in the motor vehicle (50);
- determining (13) a deviation of the setting device (60) from the defined position in the motor vehicle (50) on the basis of the image data of the calibrated camera (53) ;
- acquiring (14) at least one test image displayed by the head-up display (51) using the camera (61) of the setting device (60); and
- determining (15) setting information for the head-up display (51) on the basis of the at least one acquired test image, taking into account the deviation determined on the basis of the image data of the calibrated camera (53) .

2. Method according to Claim 1, wherein the setting information for the head-up display (51) is transmitted to a controller (52) for the head-up display (51) or the head-up display (51) is adjusted on the basis of the setting information.

3. Method according to Claim 1 or 2, wherein the projection unit (62) has a laser and the alignment pattern is a line.

4. Method according to one of the preceding claims, wherein the setting device (60) is fastened to bearings (65) of at least one sun visor of the motor vehicle (50) by way of a holder (63).

5. Method according to one of the preceding claims, wherein the defined position in the motor vehicle (50) is the position of an eyebox of the head-up display (51).

6. Computer-readable storage medium containing instructions that, when executed by a computer, prompt the computer to execute the steps of a method according to one of Claims 1 to 3 for setting a head-up display (51) in a motor vehicle (50).

7. Setting device (60) for use in a method according to one of Claims 1 to 5 for setting a head-up display (51) in a motor vehicle (50), having:
- a projection unit (62) for projecting (11) an alignment pattern onto a calibration target (70) positioned outside the motor vehicle (50);
- a camera (61) for acquiring (14) at least one test image displayed by the head-up display (51); and
- a holder (63) for fastening the setting device (60) in a defined position in the motor vehicle (50).

8. Setting device (60) according to Claim 7, wherein the setting device (60) has a manipulator (64) for adjusting the head-up display (51).

9. Setting device (60) according to Claim 7 or 8, wherein the setting device (60) has two cameras (61) for left-hand drive motor vehicles (50) and right-hand drive motor vehicles (50).

## Revendications

1. Procédé de réglage d'un afficheur tête haute (51) dans un véhicule automobile (50), comprenant les étapes suivantes :
- introduction (10) d'un dispositif de réglage (60) dans une position définie dans le véhicule automobile (50), le dispositif de réglage (60) possédant au moins une caméra (61) et une unité de projection (62) ;
- projection (11) d'un modèle d'alignement avec l'unité de projection (62) sur un tableau d'étalonnage (70) positionné à l'extérieur du véhicule automobile (50) ;
- capture (12) du tableau d'étalonnage (70) et du modèle d'alignement avec une caméra étalonnée (53) montée dans le véhicule automobile (50) ;
- identification (13) d'un écart entre le dispositif de réglage (60) et la position définie dans le véhicule automobile (50) sur la base des données d'image de la caméra étalonnée (53) ;
- capture (14) d'au moins une image de test représentée par l'afficheur tête haute (51) avec la caméra (61) du dispositif de réglage (60) ; et
- détermination (15) d'informations de réglage pour l'afficheur tête haute (51) sur la base de l'au moins une image de test capturée en tenant compte de l'écart identifié sur la base des données d'image de la caméra étalonnée (53).

2. Procédé selon la revendication 1, les informations de réglage pour l'afficheur tête haute (51) étant communiquées à un appareil de commande (52) pour l'afficheur tête haute (51) ou l'afficheur tête haute (51) étant ajusté sur la base des informations de réglage.

3. Procédé selon la revendication 1 ou 2, l'unité de projection (62) possédant un laser et le modèle d'alignement étant une ligne.

4. Procédé selon l'une des revendications précédentes, le dispositif de réglage (60) étant fixé au moyen d'un élément de maintien (63) à des paliers (65) d'au moins un pare-soleil du véhicule automobile (50).

5. Procédé selon l'une des revendications précédentes, la position définie dans le véhicule automobile (50) étant la position d'une région oculaire de l'afficheur tête haute (51).

6. Support d'enregistrement lisible par ordinateur comprenant des instructions qui, lors de l'exécution par un ordinateur, amènent l'ordinateur à exécuter les étapes d'un procédé selon l'une des revendications 1 à 3 de réglage d'un afficheur tête haute (51) dans un véhicule automobile (50).

7. Dispositif de réglage (60) destiné à être utilisé dans un procédé selon l'une des revendications 1 à 5 pour le réglage d'un afficheur tête haute (51) dans un véhicule automobile (50), comprenant :
- une unité de projection (62) destinée à projeter (11) un modèle d'alignement sur un tableau d'étalonnage (70) positionné à l'extérieur du véhicule automobile (50) ;
- une caméra (61) destinée à capturer (14) au moins une image de test représentée par l'afficheur tête haute (51) ; et
- un élément de maintien (63) destiné à fixer le dispositif de réglage (60) dans une position définie dans le véhicule automobile (50).

8. Dispositif de réglage (60) selon la revendication 7, le dispositif de réglage (60) possédant un manipulateur (64) destiné à ajuster l'afficheur tête haute (51).

9. Dispositif de réglage (60) selon la revendication 7 ou 8, le dispositif de réglage (60) possédant deux caméras (61) pour les véhicules automobiles (50) avec direction à gauche et pour les véhicules automobiles (50) avec direction à droite.
